# EUROPÄISCHE PATENTSCHRIFT

(11) **EP 1 948 834 B1**
(45) Veröffentlichungstag und Bekanntmachung des Hinweises auf die Patenterteilung: **09.12.2009**
(21) Anmeldenummer: 06828499.1
(22) Anmeldetag: 31.10.2006
(51) Int. Cl.: C21D 1/20, C21D 1/607, C21D 1/63, C21D 9/56, C21D 9/573, C21D 9/58, C21D 1/25, C21D 8/02, C21D 8/04

(54) **VERFAHREN UND VORRICHTUNG ZUR KONTINUIERLICHEN AUSBILDUNG EINES BAINITGEFÜGES IN EINEM KOHLENSTOFFSTAHL, INSBESONDERE IN EINEM BANDSTAHL**
METHOD AND DEVICE FOR THE CONTINUOUS CREATION OF A BAINITE STRUCTURE IN A CARBON STEEL, ESPECIALLY A STRIP STEEL
PROCEDE ET DISPOSITIF POUR FORMER EN CONTINU UNE STRUCTURE DE BAINITE DANS UN ACIER AU CARBONE, EN PARTICULIER DANS UN ACIER FEUILLARD

(30) Priorität: 10.11.2005 DE 102005054014
(43) Veröffentlichungstag der Anmeldung: 30.07.2008
(73) Patentinhaber: C.D. Wälzholz GmbH, 58093 Hagen (DE); Ebner Industrieofenbau Gesellschaft m.b.H., 4060 Leonding (AT)
(72) Erfinder: KAISER, Werner, 59846 Sundern (DE); HÖFINGHOFF, Heinz, 58579 Schalksmühle (DE); JUNIUS, Hans-Toni, 58644 Iserlohn (DE); HELLMANN, Michael, 58675 Hemer (DE); EBNER, Peter, A-4060 Leonding (AT); LOCHNER, Heribert, A-4060 Leonding (AT)
(74) Vertreter: Schneider, Uwe
(86) Internationale Anmeldenummer: PCT/DE2006/001925
(87) Internationale Veröffentlichungsnummer: WO 2007/054063

(56) Entgegenhaltungen:
- EP-A2- 0 006 841
- DE-A1- 2 061 726
- US-A- 2 462 202
- US-A- 4 295 902
- US-A1- 2002 100 522

## Beschreibung

Die vorliegende Erfindung bezieht sich auf ein Verfahren zur kontinuierlichen Ausbildung eines Bainitgefüges in einem Kohlenstoffstahl, insbesondere in einem Bandstahl gemäß Oberbegriff des Anspruches 1 sowie auf eine entsprechende Vorrichtung gemäß Anspruch 24.

Die Vergütung von Kohlenstoffstahl und insbesondere von Bandstahl im Durchlaufverfahren ist ein vielfach praktiziertes Verfahren zur Beeinflussung der Festigkeitseigenschaften von Bandstahl. Hierbei wird in entsprechenden Durchlaufeinrichtungen der Bandstahl zuerst durch Erwärmen mit anschließendem Abkühlen gehärtet und danach durch Anlassen mit nachfolgendem Abkühlen hinsichtlich seiner Zähigkeit verändert. Hierbei kann die zur Vergütung sowohl beim Härten als auch beim Anlassen benötigte Wärme auf unterschiedliche Arten in den Bandstahl eingebracht werden, beispielsweise durch induktive Verfahren, konduktive Verfahren oder auch durch Durchleiten des Bandstahles durch heiße Bäder oder Gasflammen. Von wesentlichem Einfluß auf die eingestellten Materialeigenschaften des Bandstahles ist es dabei, wie die Wärme in den Bandstahl eingeleitet und beim Abkühlen wieder aus dem Bandstahl ausgeleitet wird. Durch die Gefügeumwandlungen sowie die Geschwindigkeit der Aufheizungs- bzw. Abkühlungsvorgänge und die zwischengeschalteten Haltezeiten bei festgelegten Temperaturen und Gefügen ergeben sich sehr viele verschiedene Möglichkeiten, die Materialeigenschaften des Bandstahles zu beeinflussen. Als Material für derartigen Bandstahl werden häufig Kohlenstoffstähle verwendet.

Ein besonders bevorzugtes Gefüge bei der Vergütung von Kohlenstoffstählen ist der so genannte Bainit. Das Bainitgefüge weist sehr gute Eigenschaften im Hinblick auf die Verarbeitbarkeit von Werkstücken mit einem solchen Bainitgefüge auf und wird daher in einer Vielzahl von industriellen Anwendungen insbesondere auch als relativ dünnes Blechmaterial oder dergleichen benötigt. Die Herstellung eines derartigen Bainitgefüges muss hierbei sehr genau hinsichtlich der Behandlungsparameter eingehalten werden, um das gewünschte Gefüge nicht nur ansatzweise, sondern in der gesamten Gefügestruktur eines derartigen Kohlenstoffstahls hervorzurufen. So ist insbesondere die Herstellung eines reinen Bainitgefüges ein metallkundlich aufwändiger und fehleranfälliger Vorgang. Von wesentlicher Bedeutung ist es hierbei, dass nach der Austenitisierung des Kohlenstoffstahls die Ausbildung des Bainitgefüges unter exakter Einhaltung isothermer Bedingungen gewährleistet wird, damit sich keine das Bainitgefüge beeinträchtigende andere Gefügebestandteile in dem Kohlenstoffstahl erhalten. Ein einfacher und wenig Anforderungen an die Güte des Bainitgefüges stellender Einsatzzweck ist die Herstellung von Verpackungsband.

Für die Herstellung verschiedener Bainitgefüge sind je nach notwendiger Qualität des Bainit verschiedene Herstellvorrichtungen und damit auch Verfahrensführungen grundsätzlich bekannt. So ist es beispielsweise aus der US 6632301 B2 bekannt, nach einer Austenitisierung einen Bandstahl zur Abschreckung durch ein Metallschmelzbad zu führen und nach dem Durchführen des Bandstahles durch das Metallbad das Band von Rückständen des Metallbades zu mindestens zum großen Teil zu reinigen, woraufhin das Band mäanderförmig in einer Kammer geführt und umgelenkt wird, in der die isotherme Umwandlung des Kohlenstoffstahls in das Bainitgefüge erfolgt. Nachteilig an dieser Vorgehensweise ist es, dass durch das viele Wickeln des Kohlenstoffstahls in der isothermen Umwandlungseinheit die Eigenschaften des Kohlenstoffstahls in Bezug auf die Bainitbildung verschlechtert werden und auch die Ebenheit derartiger Bänder abnimmt.

Es sind andere Verfahren zur Herstellung eines bainitischen Gefüges bekannt, die eine Umwandlung des Kohlenstoffstahls vollständig in einem Metallbad oder dergleichen ausführen, wodurch die Durchlauflänge und damit das Metallbad selber sehr große Abmessungen aufweisen müssen und damit hohe fixe Kosten etwa für die Metall- oder Salzfüllung sowie Probleme bei der Temperaturdehnung dieses Salzbades hervorrufen.

Aus der DE 20 61 726 A1 ist eine Vorrichtung zur kontinuierlichen Wärmebehandlung von Bandstahl bekannt, bei der ein Stahlband eine Aufeinanderfolge von Temperaturzonen zum Erwärmen, zum Durchwärmen, zum Abschrecken, zur Bandbehandlung und zum Abhkühlen durchläuft.

Aufgabe der vorliegenden Erfindung ist es daher, ein Verfahren und eine zur Durchführung des Verfahrens geeignete Vorrichtung vorzuschlagen, mit der die Herstellung eines hochwertigen Bainitgefüges in einem Kohlenstoffstahl sehr genau durchgeführt und die Eigenschaften des Bainitgefüges sehr gleichmäßig eingehalten werden können.

Die Lösung der erfindungsgemäßen Aufgabe ergibt sich hinsichtlich des Verfahrens aus den kennzeichnenden Merkmalen des Anspruches 1, hinsichtlich der zur Durchführung des Verfahrens geeigneten Vorrichtung aus den kennzeichnenden Merkmalen des Anspruches 24 jeweils in Zusammenwirken mit den Merkmalen des zugehörigen Oberbegriffes. Weitere vorteilhafte Ausgestaltungen der Erfindung ergeben sich aus den Unteransprüchen.

Die Erfindung gemäß Anspruch 1 geht aus von einem Verfahren zur kontinuierlichen Ausbildung eines Bainitgefüges in einem Kohlenstoffstahl, insbesondere in einem Bandstahl, bei dem in einem ersten Schritt ein Austenitisieren des Kohlenstoffstahles bei einer Temperatur oberhalb der Austenitisierung-Temperatur durchgeführt wird, danach ein Einbringen des austenitisierten Kohlenstoffstahles in ein Bad mit einem Abschreckmittel zur Abkühlung des Kohlenstoffstahles auf eine geringere Temperatur als die Austenitisierungstemperatur erfolgt, der Kohlenstoffstahl auf die Umwandlungstemperatur für Bainit eingestellt wird und danach ein Halten des Kohlenstoffstahles über eine Zeitdauer bei dieser Umwandlungstemperatur sowie ein anschließendes Abkühlen des Kohlenstoffstahles erfolgt. Ein derartiges gattungsgemäßes Verfahren wird dadurch weiterentwickelt, dass der Kohlenstoffstahl nach der Austenitisierung ein Bad mit einer volumenmäßig geringen Menge des Abschreckmittels durchläuft und dabei so lange mit dem Abschreckmittel in Kontakt gebracht wird, bis sich ein festlegbarer Anteil des Bainitgefüges am Gesamtgefüge des Kohlenstoffstahles in dem Bad mit dem Abschreckmittel ausgebildet hat, beim Austritt des Kohlenstoffstahles aus dem Bad Reste des Abschreckmittels von der Oberfläche des Kohlenstoffstahles mittels der Einwirkung eines Gases von dem Kohlenstoffstahl entfernt werden und nachfolgend die Umwandlung der restlichen Gefügebestandteile des Kohlenstoffstahles in Bainit in einer nachgeschalteten isothermen Temperierungsstation bei der Umwandlungstemperatur für Bainit ohne jede Umlenkung des Kohlenstoffstahles beim Durchlauf durch die isotherme Temperierungsstation solange erfolgt, bis sich das Bainitgefüge vollständig innerhalb des Kohlenstoffstahles ausgebildet hat.

Die Aufteilung der Einstellung des Bainitgefüges des Kohlenstoffstahls in zwei aufeinander folgende Abschnitte einmal in dem Abschreckmittel und zum anderen in der isothermen Temperierungsstation bietet den Vorteil, dass das Bad mit dem Abschreckmittel volumenmäßig relativ klein gehalten werden kann und nur ein Teil der Umwandlung des Bainits in diesem Bad erfolgen muss. Gleichzeitig kann auch die Durchlauflänge durch die isotherme Temperierungsstation minimiert werden, da ja schon ein Teil der Umwandlung in dem Bad mit dem Abschreckmittel erfolgt und damit wird ein sonst notwendiges mehrfaches Umlenken des Kohlenstoffstahls innerhalb der isothermen Temperierungsstation vermieden. Hierdurch können insbesondere Beeinträchtigungen der Planlage etwa eines als Bandstahl ausgebildeten Kohlenstoffstahls vermieden werden, die bei bekannten Verfahren zur Herstellung von Bainit nicht zu vermeiden sind. Auch bietet die Veränderung der Anteile der Bildung von Bainit in dem Bad und in der isothermen Temperierungsstation vielfältige Möglichkeiten, die Bildung des Bainit zu beeinflussen und damit auch unterschiedliche Qualitäten des Kohlenstoffstahls herstellen zu können. Hierzu kann insbesondere etwa die Temperatur des Bades und die Temperatur in der isothermischen Temperierungsstation beziehungsweise die Durchlaufzeit des Kohlenstoffstahls durch diese beiden Abschnitte der Bainitbildung variiert werden.

Von wesentlicher Bedeutung ist es weiterhin, wenn im Bereich des Übergangs von dem Bad mit dem Abschreckmittel in die isotherme Temperierungsstation eine Entfernung von Resten des Abschreckmittels von der Oberfläche des Kohlenstoffstahles mittels der Einwirkung eines Gases durchgeführt wird. Diese berührungslos mittels des Gases durchgeführte Entfernung von Resten des Abschreckmittels von der Oberfläche des Kohlenstoffstahls ist für die Weiterbehandlung des typischerweise bandförmigen Kohlenstoffstahls zum einen in der isothermen Temperierungsstation, zum anderen aber auch in nachfolgenden Stationen von großer Bedeutung, da jede Verschleppung von Abschreckmittel eine Beeinträchtigung der Oberfläche des Kohlenstoffstahls dadurch mit sich bringen kann, dass sich Abschreckmittel auf dem Kohlenstoffstahl ablagert oder die Einwirkung von außen auf dem Kohlenstoffstahl aufgebrachter anderer Substanzen verändert. Auch wird dadurch vermieden, dass zu viel Abschreckmittel aus dem Bad entfernt wird und damit ein ständiges Nachfüllen des Bades mit frischem Abschreckmittel notwendig ist, wodurch unnötige Kosten hervorgerufen werden. Die Verwendung von Gasen zur Entfernung dieser Rückstände des Abschreckmittels erlaubt hierbei eine schonende und genau steuerbare Möglichkeit zur Entfernung derartiger Rückstände, die auch mechanische Beeinträchtigungen der Oberfläche des Kohlenstoffstahles verhindert.

Für die Qualität des hergestellten Kohlenstoffstahles ist weiterhin von Bedeutung, dass eine Umlenkung des Kohlenstoffstahles in der isothermen Temperierungsstation solange vermieden wird, bis sich das Bainitgefüge vollständig innerhalb des Kohlenstoffstahles ausgebildet hat, da jede Umlenkung oder andere mechanische Belastung eines im Entstehen befindlichen Bainitgefüges negative Auswirkungen auf die Qualität beziehungsweise die Menge des gebildeten Bainitgefüges hat, so dass jede Art der Umlenkung bzw. anderen mechanischen Belastung während des Durchlaufs des Kohlenstoffstahls durch die isotherme Temperierungsstation vermieden werden sollte. Gerade auch in diesem Punkt beseitigt das vorgeschlagene Verfahren wesentliche Nachteile bekannter Herstellverfahren für Bainitgefüge.

Von besonderem Vorteil ist es, wenn sich in einer Weiterbildung des erfindungsgemäßen Verfahrens die Einwirkungszeit des Bades mit dem Abschreckmittel auf das Gefüge des Kohlenstoffstahles so lange gewählt wird, bis sich im wesentlichen die Hälfte des Bainitgefüges des Kohlenstoffstahles in dem Bad mit dem Abschreckmittel ausgebildet hat. Dadurch lässt sich die Bildung des Bainitgefüges so steuern, dass beim Übergang zwischen dem Bad mit dem Abschreckmittel und der isothermischen Temperierungsstation große-Sprünge in der Temperatur des Kohlenstoffstahls sicher vermeiden lassen, die bei einer noch nicht so weit ausgeführten Ausbildung des Bainitgefüges schwieriger zu beherrschen wären. Grundsätzlich ist es aber auch denkbar, innerhalb des Bades mit dem Abschreckmittel einen niedrigeren oder einen höheren Anteil des Bainitgefüges auszubilden als die vorstehend angegebenen etwa 50%.

Von Vorteil ist es weiterhin, wenn die Einwirkungszeit des Bades mit dem Abschreckmittel sowie die Verweildauer des Kohlenstoffstahles in der isothermen Temperierungsstation einer typischen Gesamtdauer der Bainitbildung entspricht. Hiermit ist bei typischen Kohlenstoffstählen in der Regel eine vollständige Umwandlung des Gefüges aus der Austenitphase in Bainit zu erreichen, wobei die Aufteilung wie vorstehend schon beschrieben unterschiedlich nach der Entstehung von Bainitgefüge in dem Bad und in der isothermen Temperierungsstation eingestellt werden kann.

Von Wichtigkeit für den Erfolg bei der Herstellung einer vollständigen Umwandlung des Gefüges des Kohlenstoffstahls in Bainit ist es, dass der Übergang von dem Bad mit dem Abschreckmittel in die isotherme Temperierungsstation im wesentlichen ohne Temperaturveränderung des Kohlenstoffstahles bei weiterlaufender Bildung des Bainitgefüges erfolgt. Die Herstellung des Bainit erfordert genau definierte Temperaturverhältnisse während der relativ langen Ausbildung des Bainitgefüges, wobei schon kleine Änderungen der Temperatur des Kohlenstoffstahls während dieser Zeit deutliche Auswirkungen auf die Qualität des Gefüges haben können. Da zwischen dem Bad mit dem Abschreckmittel und der isothermen Temperierungsstation unterschiedliche Kontaktverhältnisse der Umgebung mit dem Kohlenstoffstahl auftreten (einmal typischerweise ein Metall-/ Salzgemisch in dem Bad und Inertgas in der isothermen Temperierungsstation) und darüber hinaus dieser Mediensprung beim Übertritt aus dem Bad in die isotherme Temperierungsstation auch sprunghafte Veränderungen der Temperatur des Kohlenstoffstahls hervorrufen kann, ist es von besonderer Wichtigkeit, diesen hierbei möglicherweise auftretenden Temperaturpeak ganz zu vermeiden oder auf zulässige Werte zu begrenzen. Wird dieser Temperaturpeak nicht vermieden beziehungsweise begrenzt, so stellt sich beim Durchlauf des Kohlenstoffstahls durch diesen Temperaturpeak an der Schnittstelle zwischen Bad und Temperierungsstation zumindest kurzzeitig ein anderer Gefügezustand als der gewünschte Zustand des Bainitgefüges ein, wodurch insgesamt die Qualität des Bainitgefüges vermindert wird.

Vorteilhaft zur Verbesserung des Übergangs zwischen dem Bad mit dem Abschreckmittel und der isothermen Temperierungsstation kann es auch sein, wenn der Übergang des Kohlenstoffstahles von der Austenitisierungsstation in das Bad mit dem Abschreckmittel im wesentlichen senkrecht zur Badoberfläche erfolgen. Hierdurch ergeben sich sehr gleichmäßige und definierbare Eigenschaften hinsichtlich des Austritts des Kohlenstoffstahls aus dem Bad, gleichzeitig ist durch den abrupten senkrechten Austritt des Kohlenstoffstahls aus dem Bad das Verschleppen von Abschreckmittel aus dem Bad heraus minimiert.

In einer vorteilhaften Ausgestaltung ist es denkbar, dass die Entfernung von Resten des Bades von der Oberfläche des Kohlenstoffstahles mittels einer Abblasung des Abschreckmittels mittels Gas von dem Kohlenstoffstahl durchgeführt wird. Eine derartige Abblasung erfolgt berührungslos und verändert damit die Oberfläche des Kohlenstoffstahls nicht, wie dies etwa berührende Verfahren wie ein Abrakeln oder ein Ziehen des Kohlenstoffstahls durch eine berührende Dichtung hervorrufen können. Zum anderen ist ein Abblasen bei entsprechender Einstellung der Medienströme sehr zuverlässig und wirksam, auch nutzen sich sonst etwa beim berührenden Entfernungsverfahren notwendige Einrichtungen aufgrund der berührungslosen Wirkungsweise nicht ab. Denkbar ist es hierbei, dass die Abblasung des Abschreckmittels unter Schutzgasatmosphäre erfolgt. Das Abblasen des Abschreckmittels unter Schutzgasatmosphäre sorgt dafür, dass im Bereich des Übergangs zwischen dem Bad mit dem Abschreckmittel und der isothermen Temperierungsstation keine Luft an die Oberfläche des Kohlenstoffstahls gelangen kann und damit eine Veränderung der Oberfläche des Kohlenstoffstahls etwa durch Oxidation oder sonstige Vorgänge im Zusammenhang mit dem Luftzutritt nicht beeinträchtigt wird.

Von weiterem Vorteil ist es hierbei, wenn die Abblasung des Abschreckmittels mittels temperierter Gase, insbesondere mittels temperierter Inertgase erfolgt. Durch die Temperierung der Gase bzw. Inertgase, die das Abschreckmittel von dem Kohlenstoffstahl abblasen, kann eine sehr genaue Temperatursteuerung der Temperatur des Kohlenstoffstahls erreicht werden, wodurch die Ausbildung des Bainitgefüges trotz der laufenden Abblasung nicht beeinträchtigt oder das Bainitgefüge verändert wird. So kann die Temperierung der Gase für die Abblasung des Abschreckmittels von dem Kohlenstoffstahl derart eingestellt werden, dass eine Veränderung der Temperatur des Kohlenstoffstahles bei der laufenden Ausbildung des Bainitgefüges vermieden wird, wodurch etwa im Bereich des Übergangs zwischen dem Bad mit dem Abschreckmittel und der isothermen Temperierungsstation auftretende Temperaturveränderungen innerhalb des Kohlenstoffstahls kompensiert werden können. Eine Erhöhung der Temperatur des Kohlenstoffstahls nach dem Austritt aus dem Bad durch die laufende Umwandlung des Gefüges aufgrund des Übergangs in die gasförmige Umgebung der isothermen Temperierungsstation könnte sonst zu einer Überhitzung des Kohlenstoffstahls mit den negativen Auswirkungen auf die Güte des bainitischen Gefüges führen. Hierfür kann in weiterer Ausgestaltung die Temperierung der Gase für die Abblasung des Abschreckmittels von dem Kohlenstoffstahl derart geregelt werden, dass die beim Verlassen des Bades mit dem Abschreckmittel auftretende Umwandlungswärme in dem Kohlenstoffstahl durch die temperierten Inertgase abgeführt und die Temperatur des Kohlenstoffstahles im wesentlichen konstant auf der Umwandlungstemperatur für Bainit gehalten wird.

Weiterhin ist es für die Güte des bainitischen Gefüges von großer Bedeutung, dass im Bereich der Abblasung des Abschreckmittels keine Umlenkung des Kohlenstoffstahles durch Umlenkrollen vorgenommen wird. Eine Umlenkung des Kohlenstoffstahls in diesem Bereich während der Bildung des Bainitgefüges verändert zwangsläufig das entstehende Bainitgefüge durch mechanische Effekte und Veränderung des Temperaturverhaltens, so dass nur durch Vermeiden einer entsprechenden Umlenkung die Qualität des Bainitgefüges gewährleistet werden kann. Dies kann z.B. dadurch erreicht werden, dass der Übergang des Kohlenstoffstahles von dem Bad mit dem Abschreckmittel in die isotherme Temperierungsstation im wesentlichen senkrecht zur Badoberfläche erfolgt. Senkrecht zur Badoberfläche tritt der Kohlenstoffstahl in den Bereich der Abblasung des Abschreckmittels ein und von da aus weiter senkrecht nach oben, so dass die Umlenkung des Kohlenstoffstahls noch vollständig innerhalb des Bades und dadurch unter sehr gleichmäßigen Bedingungen innerhalb des Bades erfolgt. Die Umlenkung innerhalb des Bades hat dabei wenig bis keine Einflüsse auf die Ausbildung des Bainitgefüges, da das Bad hier entsprechende Pufferwirkung auf die Temperaturführung des Kohlenstoffstahls ausübt.

Weiterhin ist es von Bedeutung, dass die Länge der isothermen Temperaturführung in der isothermen Temperierungsstation in Abhängigkeit von der Durchlaufgeschwindigkeit des Kohlenstoffstahles derart eingerichtet wird, dass sich innerhalb der isothermen Temperierungsstation in dem Kohlenstoffstahl ein vollständiges Bainitgefüge ausbilden kann. Die restliche Umwandlung des noch nicht bainitischen Gefüges des Kohlenstoffstahls, das aufgrund der Verfahrensführung in dem Bad mit dem Abschreckmittel noch nicht den gewünschten bainitischen Zustand erreicht hat, erfolgt hierbei unter sehr gleich bleibenden Bedingungen innerhalb der isothermen Temperierungsstation, die im wesentlichen identische Verhältnisse über einen längeren Abschnitt der Bahn des Kohlenstoffstahls gewährleistet und dabei keine negativen Einflüsse mechanischer oder thermischer Art auf den Kohlenstoffstahl ausübt. Erst im Bereich des Endes der Bahn des Kohlenstoffstahls durch die isotherme Temperierungsstation liegt dann ein vollständig bainitisches Gefüge in dem Kohlenstoffstahl vor, wobei die Länge der isothermen Temperierungsstation mit entsprechenden Reserven ausgelegt werden kann, dass bei unterschiedlichen Durchlaufgeschwindigkeiten des Kohlenstoffstahls durch die isotherme Temperierungsstation gleichwohl immer eine vollständige Umwandlung in einen bainitisches Gefüge sichergestellt ist.

Weiterhin ist es von Vorteil, wenn der Kohlenstoffstahl nach der vollständigen Einstellung des Bainitgefüges eine Kühleinrichtung durchläuft, in der der Kohlenstoffstahl auf eine Temperatur gekühlt wird, die Oberflächenveränderungen, insbesondere Oxidation oder Farbveränderungen der Oberfläche verhindert. Eine gezielte und möglichst kurze Abkühlung des entstandenen Bainitgefüges des Kohlenstoffstahls sorgt dafür, dass sich nicht noch durch nachträgliche Gefügeveränderungen das hergestellte Bainitgefüge unzulässig umwandeln kann oder das die Oberfläche des Kohlenstoffstahls etwa durch Oxidation oder anderer mit der Umgebung des Kohlenstoffstahls einhergehende Veränderung in einer Weise verändert wird, die das fertige Produkt Kohlenstoffstahl nicht aufweisen soll. Je kürzer dieser Abkühlungsprozess gehalten wird, um so weniger Zeit haben andere Einflussgrößen, unzulässige Veränderungen des bainitischen Kohlenstoffstahls zu bewirken. Hierbei kann in weiterer Ausgestaltung die Kühleinrichtung auch unter einer Schutzgasatmosphäre betrieben werden, um Oberflächenveränderungen, insbesondere Oxidation oder Farbveränderungen der Oberfläche zu verhindern. Denkbar ist es allerdings auch, dass in anderer Ausgestaltung die Kühleinrichtung gezielt unter Luft betrieben wird, um eine Oberflächenveränderung in Form einer Bläuung des Kohlenstoffstahles herzustellen. Derartige Oberflächen des Kohlenstoffstahls sind für manche Anwendungszwecke derartiger Kohlenstoffstähle gefordert beziehungsweise zweckmäßig. Eine sichere Vermeidung unzulässiger Veränderungen der Oberfläche des Kohlenstoffstahls lässt sich dann vermeiden, wenn der Kohlenstoffstahl aus der Kühleinrichtung mit einer Austrittstemperatur von im wesentlichen 100 °C oder weniger austritt. Bei diesen Temperaturen ist die thermische Aktivierung der Oberfläche des Kohlenstoffstahls nur noch gering und führt in aller Regel nicht mehr zu unzulässigen Veränderungen der Oberfläche.

Von besonderem Vorteil ist es, wenn als Abschreckmittel ein Metallbad benutzt wird. Derartige Metallbäder sind grundsätzlich aus der Vergütung von Kohlenstoffstählen bekannt, wobei es für das hier vorliegende Verfahren von Vorteil ist, wenn als Metallbad ein Salz-/Blei-/Wismutbad benutzt wird. Durch diese Zusammensetzung des Metallbades wird erreicht, dass die entsprechenden Temperatureigenschaften sowie auch die Benetzungseigenschaften und die Pufferwirkung des Metallbades für die Herstellung bainitischer Gefüge sicher gewährleistet sind.

Eine Verbesserung der Aufheizungsverhältnisse des Kohlenstoffstahls vor dem Eintreten in die Austenitisierungsstation lässt sich erreichen, wenn der in die Austenitisierungsstation einlaufende, noch relativ kalte Kohlenstoffstahl vor dem Einlaufen in die Austenitisierungsstation zur Vortemperierung ein Aufwärmbad, vorzugsweise einen Bereich des Bades mit dem Abschreckmittel durchläuft. Ein derartiges Aufwärmbad und insbesondere auch das Bad mit dem Abschreckmittel erlauben ein sehr gleichmäßiges Aufheizen des Kohlenstoffstahls, wobei durch Eintauchen in das Bad mit dem Abschreckmittel gleichzeitig auch ein Nutzen der bei dem Abschrecken des Kohlenstoffstahls in der nachfolgenden Phase der Bildung des Bainitgefüges ohnehin anfallenden Umwandlungswärme möglich wird. Hierdurch kann das Bad mit dem Abschreckmittel auf der Umwandlungstemperatur für die Bainitbildung des Kohlenstoffstahles gehalten werden, da der Kohlenstoffstahl schon vor dem Eintritt in die Austenitisierungsstation dieses Bad durchläuft und die bei der Abkühlung des Kohlenstoffstahles nach dem Austenitisieren abgegebene Abschreckwärme an den noch relativ kalt in die Austenitisierungsstation einlaufenden Kohlenstoffstahl abgibt, der danach in die Austenitisierungsstation einläuft.

Eine weitere Verbesserung der Verhältnisse beim Aufheizen des Kohlenstoffstahls für die Austenitisierung lässt sich erreichen, wenn im Bereich der Austenitisierung des Kohlenstoffstahles der Kohlenstoffstahl derart geführt wird, dass der in die Austenitisierungsstation einlaufende, noch relativ kalte Kohlenstoffstahl von Wärmestrahlung des auf Austenitisierungstemperatur gebrachten Kohlenstoffstahles auf der Auslaufseite der Austenitisierungsstation mit erwärmt wird. Durch die Wärmestrahlung, die von dem schon auf Austenitisierungstemperatur befindlichen Abschnitt des Kohlenstoffstahls in die Umgebung abgegeben wird, kann der sich noch im Einlaufbereich befindliche Abschnitt des Kohlenstoffstahls automatisch mit erwärmt und dadurch eine bessere Homogenisierung des Kohlenstoffstahls in der Austenitphase und damit eine verbesserte Löslichkeit des Kohlenstoffs innerhalb des Kohlenstoffstahls erreicht werden. Hierdurch wird auch die Bildung des Bainitgefüges befördert, ohne dass für eine Aufheizung des Kohlenstoffstahls zusätzliche Kosten hierfür verursacht werden. Es wird hiermit erreicht, dass die an den einlaufenden, noch relativ kalten Kohlenstoffstahl abgegebene Wärmestrahlung des schon höher temperiertem Kohlenstoffstahls auf der Auslaufseite der Austenitisierungsstation den Kohlenstoffstahl sehr gleichmäßig erwärmt und stationäre Temperierungsverhältnisse bei der Austenitisierung sowie eine Homogenisierung des Austenitgefüges des Kohlenstoffstahles bewirkt. Weiterhin kann die Güte der Aufheizung des Kohlenstoffstahls dadurch verbessert werden, dass die Verweildauer des Kohlenstoffstahles in der Austenitisierungsstation unter dem Einfluss der von dem schon höher temperiertem Kohlenstoffstahl abgegebenen Strahlungswärme so lang gewählt wird, dass sich ein homogenes Austenitgefüge in dem Kohlenstoffstahl einstellt.

Ein denkbares Aufheizverfahren für den Kohlenstoffstahl in der Austenitisierungsstation kann eine induktive Erwärmung des Kohlenstoffstahls sein. Selbstverständlich sind auch andere Aufheizverfahren denkbar, die in der Vergütetechnik üblicherweise eingesetzt werden.

Die Erfindung beschreibt weiterhin eine Vorrichtung zur Ausbildung eines Bainit- oder Sorbitgefüges in einem Kohlenstoffstahl, insbesondere in einem Bandstahl, insbesondere zur Durchführung eines Verfahrens nach Anspruch 1, wobei die Vorrichtung eine Austenitisierungsstation aufweist, mit der der Kohlenstoffstahl auf eine Temperatur oberhalb der Austenitisierung-Temperatur gebracht wird, weiterhin ein Bad mit einem Abschreckmittel zur Abkühlung des austenitisierten Kohlenstoffstahles auf eine geringere Temperatur als die Austenitisierungstemperatur sowie eine isotherme Temperierungsstation zum Halten des Kohlenstoffstahles über eine Zeitdauer bei dieser Umwandlungstemperatur und abschließend eine Abkühlungsstation zum anschließenden Abkühlen des Kohlenstoffstahles. Eine derartige Vorrichtung wird dadurch weiterentwickelt, dass die isotherme Temperierungsstation im wesentlichen senkrecht turmartig ausgebildet ist und die Länge des freien Durchlaufes des Kohlenstoffstahles durch die isotherme Temperierungsstation die Umwandlung des restlichen Gefüges in Bainit ohne Umlenkung des Kohlenstoffstahles erlaubt. Dies ist deshalb von Wichtigkeit, da die Länge des freien Durchlaufes des Kohlenstoffstahles innerhalb der isothermen Temperierungsstation mindestens derart ausgebildet sein sollte, dass die Umwandlung des restlichen Gefüges in Bainit ohne Umlenkung oder sonstige mechanische Beeinflussung des Kohlenstoffstahles erfolgen kann. Durch die Umlenkung oder sonstige mechanische Beeinflussung des Kohlenstoffstahls während der Bildung des Bainit in der isothermen Temperierungsstation können negative Einflüsse auf die Ausbildung des Bainit hervorgerufen werden, die für eine Verschlechterung der Qualitätseigenschaften des derart hergestellten Kohlenstoffstahls sorgen können. Daher sollte die restliche Bildung des Bainit in der isothermen Temperierungsstation ohne weitere mechanische Einflüsse etwa durch Umlenkungen oder dergleichen erfolgen und erst nach dem Abschluss der Bildung des vollständigen Bainitgefüges der Kohlenstoffstahl wieder mechanisch beeinflusst werden.

Weiterhin ist es von Vorteil, wenn durch die Bildung des Bainitgefüges mit einem festlegbaren Anteil am Gesamtgefüge des Kohlenstoffstahles das Volumen des Abschreckmittels in dem Bad minimierbar ist. In dem Bad mit dem Abschreckmittel kann hierbei der für die Auslösung der Umwandlung in das Bainitgefüge wesentliche erste Umwandlungsschritt erfolgen, wobei dann in der nachgelagerten isothermen Temperierungsstation die restliche Umwandlung stattfindet. Da der Gradient der Ausbildung des Bainitgefüges nicht linear über die Dauer der Einwirkung der Umwandlungstemperatur des Bainit verläuft, kann mit relativ geringen Mengen von Abschreckmittel und einer zeitlich dazu längeren Einwirkung der Temperatur in der isothermen Temperierungsstation die benötigte Menge des Abschreckmittels reduziert und damit das Bad mit dem Abschreckmittel insgesamt wesentlich geringer dimensioniert werden, als wenn die Umwandlung in das Bainitgefüge vollständig innerhalb eines solchen Bades erfolgen müsste. Auch ist durch die sehr intensive Umwandlung in das Bainitgefüge innerhalb des Bades mit dem Abschreckmittel die Länge der Durchlaufzeit durch die isotherme Temperierungsstation minimierbar, wodurch die sonst üblichen Umlenkungen des Kohlenstoffstahls innerhalb einer solchen isothermen Temperierungsstation gänzlich vermieden oder zu mindestens sehr deutlich reduziert werden können. Damit erhöht sich bei gleichzeitiger Verbesserung der Qualität des Bainitgefüges sowohl die Wirtschaftlichkeit des Herstellverfahrens, aber auch die Kosten für die anlagenmäßige Umsetzung eines derartigen Verfahrens lassen sich hierdurch deutlich reduzieren.

Von Wichtigkeit ist es weiterhin, dass innerhalb des Bades mit dem Abschreckmittel Umlenkrollen derart angeordnet sind, dass das Austauchen des Kohlenstoffstahles aus dem Bad und in die isotherme Temperierungsstation und/oder das Eintauchen des Kohlenstoffstahles aus der Austenitisierungsstation in das Bad im wesentlichen senkrecht erfolgt. Hierdurch ist ein sehr definierter und gleichmäßiger Übergang des Kohlenstoffstahls in das Bad und insbesondere auch aus dem Bad in die isotherme Temperierungsstation erzielbar, der für die Einhaltung des Temperaturverlaufs bei der Ausbildung des Bainitgefüges von zentraler Bedeutung ist. Durch das Anordnen der Umlenkrolle innerhalb des Abschreckmittels und die damit mit dem Abschreckmittel identische Temperatur der Umlenkrollen werden negative Einflüsse der Umlenkung beziehungsweise der Umlenkrollen auf die Gefügeausbildung weitestgehend vermieden.

Weiterhin ist es denkbar, dass zwischen dem Bad mit dem Abschreckmittel und der isothermen Temperierungsstation eine Einrichtung zur Entfernung von Resten des Abschreckmittels von der Oberfläche des Kohlenstoffstahles, insbesondere eine Abblasvorrichtung zum Abblasen des Abschreckmittels von dem Kohlenstoffstahl angeordnet ist. Eine derartige Einrichtung zur Entfernung von Resten des Bades von der Oberfläche des Kohlenstoffstahls dient dazu, das Abschreckmittel des Bades einerseits möglichst zusammen zu halten und damit die Verluste aus der Verschleppung des Abschreckmittels zu minimieren, zum anderen wirken derartige Reste des Abschreckmittels auf der Oberfläche des Kohlenstoffstahls gegebenenfalls nachteilig für nachfolgende Behandlungsschritte und müssen daher vermieden werden.

In einer weiteren Ausgestaltung ist es denkbar, dass zur Temperierung der Schutzgasatmosphäre in der isothermen Temperierungsstation und/oder der Abkühlstation geregelte Schutzgas-Beheizungen oder Wasser-Wärmetauscher angeordnet sind. Durch derartige Wärmetauscher kann eine sehr feinfühlige Regelung der Schutzgasatmosphäre in der isothermen Temperierungsstation hinsichtlich ihrer Temperatur erreicht werden.

Weiterhin kann durch eine Beheizungseinrichtung eine Schutzgasatmosphäre in der isothermen Temperierungsstation temperiert werden. Selbstverständlich sind auch andere Beheizungstechniken für die Schutzgasatmosphäre innerhalb der isothermen Temperierungsstation denkbar.

Von Vorteil für die anlagenmäßige Umsetzung der Vorrichtung ist es, wenn die isotherme Temperierungsstation und/oder die Kühleinrichtung in einem ggf. gemeinsamen, senkrecht angeordneten turmartigen Gehäuse aufgenommen sind. Durch ein derartiges turmartiges Gehäuse wird der benötigte Bauraum für die in diesem Bereich senkrechte Führung des Kohlenstoffstahls durch die isotherme Temperierungsstation und die Kühleinrichtung minimiert, wobei in einer weiteren Ausgestaltung das turmartige Gehäuse so unterteilt werden kann, dass der isotherm zu haltende Kohlenstoffstahl aus dem Bad mit dem Abschreckmittel in einer ersten Kammer senkrecht von unten nach oben und der zu kühlende, nunmehr vollständig in Bainit umgewandelte Kohlenstoffstahl in einer zweiten, benachbart angeordneten Kammer senkrecht von oben nach unten durchläuft. Hierdurch werden die unmittelbar aufeinanderfolgenden Behandlungsschritte bei der Weiterverarbeitung des zu mindestens teilweise bainitisch eingestellten Gefüges auch Raum mäßig sehr kompakt hintereinander ausgeführt.

In weiterer Ausgestaltung kann am obersten Punkt des turmartigen Gehäuses eine Umlenkeinheit angeordnet sein, mit der der dort vollständig bainitisch umgewandelte Kohlenstoffstahl aus der isothermen Temperierungsstation in eine Abkühlstation umgelenkt wird. Diese Umlenkung am obersten Punkt des turmartiges Gehäuses trägt zur kompakten Bauweise der beiden in dem turmartigen Gehäuse angeordneten Behandlungskammern bei.

In einer weiteren vorteilhaften Ausgestaltung kann die Vorrichtung auch zur Ausbildung eines Sorbitgefüges nutzbar gemacht werden, indem das Bad mit dem Abschreckmittel auf einer Temperatur gehalten wird, die zur Umwandlung des Kohlenstoffstahles in Sorbit benötigt wird und der Kohlenstoffstahl so lange mit dem Abschreckmittel in Kontakt gebracht wird, bis sich das Sorbitgefüge vollständig oder nahezu vollständig ausgebildet hat und anschließend in der nachgeschalteten isothermen Temperierungsstation im wesentlichen nur noch eine Abkühlung des Kohlenstoffstahles mit dem ausgebildeten Sorbitgefüge durchführbar ist. Hierdurch wird erreicht, dass auf der gleichen Anlage sowohl die Herstellung eines Bainitgefüges als auch diejenige eines Sorbitgefüges ausgeführt werden kann, ohne dass größere Umbauten der Anlage zwischen den verschiedenen Herstellungsvorgängen erforderlich werden. Es muss lediglich dafür gesorgt werden, dass die Temperaturen in dem Metallbad beziehungsweise in der isothermen Temperierungsstation und die Durchlaufgeschwindigkeiten des Kohlenstoffstahls an die Ausbildung eines Sorbitgefüges angepasst werden, wobei die Wirkung der isothermen Temperierungsstation bei der Bildung eines Sorbitgefüges eigentlich mehr in einer Kühlung des in dem Durchlauf durch das Bad schon nahezu vollständig entstandenen Sorbitgefüges besteht. Hierdurch wird die Wirtschaftlichkeit einer Ausnutzung einer entsprechenden Anlage noch einmal gesteigert.

Eine besonders bevorzugte Ausführungsform des erfindungsgemäßen Vorrichtung zur Durchführung des Verfahrens zeigt die Zeichnung.

### Es zeigen:

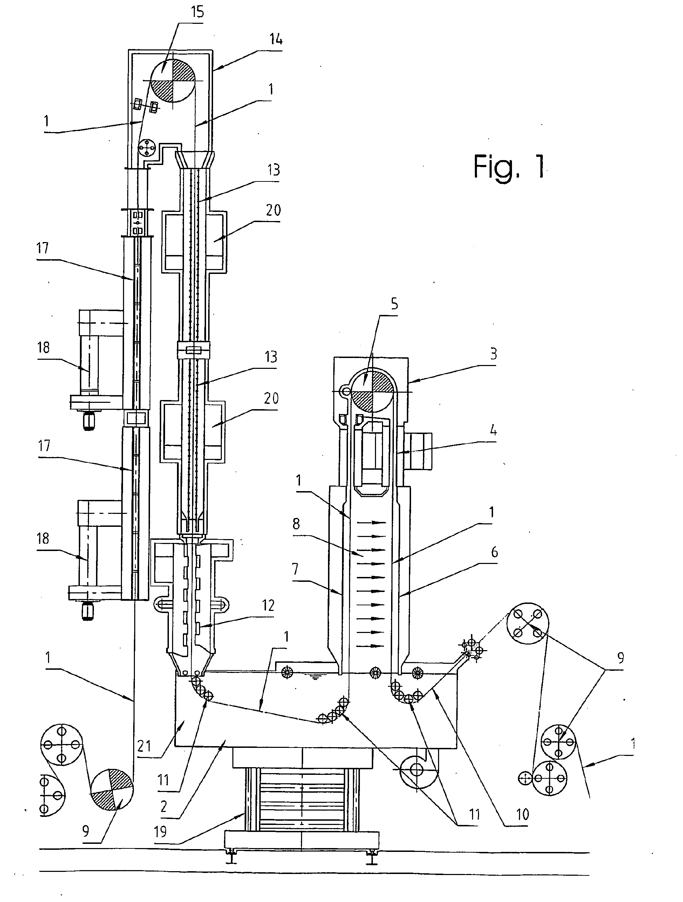

- Figur 1: - eine sehr schematische Darstellung des prinzipiellen Aufbaus einer Vorrichtung gemäß der vorliegenden Erfindung im Schnitt und beschränkt auf die wesentlichen Vorrichtungskomponenten.

In der Figur 1 ist in einer sehr schematischen Darstellung der Aufbau einer Vorrichtung zur Durchführung des erfindungsgemäßen Verfahrens dargestellt, wobei hieraus auch der grundsätzliche Verfahrensablauf ersichtlich wird.

Die Vorrichtung zeigt nur die wesentlichen Abschnitte einer derartigen Anlage zur Durchführung des erfindungsgemäßen Verfahrens, die direkt mit der Temperierung bei der Herstellung des bainitischen Gefüges zu tun haben. Der Kohlenstoffstahl 1 läuft einlaufseitig - in der Figur 1 rechts dargestellt - über verschiedene Rollen 9 von einer nicht dargestellten Haspeleinheit in den Bereich der Vorwärmzone 10, des Bades 2 mit dem Abschreckmittel 21, wo der Kohlenstoffstahl 1 über dort angeordnete Rollen 11 durch das dort schon aufgeheizte Abschreckmittel 21 geführt wird. Das Abschreckmittel 21 wird in noch näher beschriebener Weise im linken Teil des Bades 2 durch die Abschreckung des dort nach dem Durchlaufen der Austenitisierungsstation 3 in das Bad 2 eintretenden Kohlenstoffstahls 1 aufgeheizt. Hierdurch wird der Kohlenstoffstahl 1 in der Vorwärmzone 10 vorgeheizt und tritt dann senkrecht nach oben in die Austenitisierungsstation 3 ein, in der über eine beispielsweise induktive Erwärmung 4 in einer Aufheizzone 6 der Kohlenstoffstahl 1 in den Bereich der Austenitisierungstemperatur aufgeheizt wird. Im oberen Bereich der Austenitisierungsstation 3 ist eine Umlenkeinheit 5 dargestellt, nach deren passieren der Kohlenstoffstahl 1 wieder senkrecht nach unten in Richtung auf das Bad 2 zu gefördert wird. In dieser Ausgleichszone 7 wird der Kohlenstoffstahl 1 dann auf die endgültige Austenitisierungstemperatur erhitzt, wobei er durch Ausgleichsvorgänge ein sehr homogenes Austenitgefüge annimmt und dabei auch eine Wärmestrahlung 8 in Richtung auf die Aufheizzone 6 abgibt, die auf den dort gerade durchlaufenden Kohlenstoffstahl 1 trifft und diesen ebenfalls mit erhitzt. Durch diese Anordnung der Funktionselemente innerhalb der Austenitisierungsstation 3 wird der Kohlenstoffstahl 1 sehr gleichmäßig erwärmt und dafür gesorgt, dass der Kohlenstoff in gleichmäßige Lösung innerhalb des Kohlenstoffstahls 1 geht.

Nach dem unterseitigen Austreten des Kohlenstoffstahls 1 aus der Austenitisierungsstation 3 in Richtung auf das Bad 2 wird der Kohlenstoffstahl 1 wiederum über in dem Bad 2 angeordnete Umlenkrollen 11 umgelenkt und dabei in dem Abschreckmittel 21 abgekühlt. Das Abschreckmittel 21 ist hierbei zur Ausbildung von Bainitgefüge auf eine Temperatur eingestellt, die etwa bei 400° Celsius liegt und typischerweise für Kohlenstoffstähle 1 zur Herstellung von Bainitgefüge genutzt wird. Beim Durchlauf des Kohlenstoffstahls 1 durch das Bad 2 in Richtung auf die links angeordneten Umlenkrollen 11 unterhalb des turmartigen Gehäuses 14 kühlt sich der Kohlenstoffstahl 1 auf die Bainitisierungstemperatur ab, wobei sich ein Teil des Gefüges des Kohlenstoffstahls 1 in ein Bainitgefüge umwandelt. Je nach Länge des Durchlaufs durch das Bad 2 wird sich ein unterschiedlicher Anteil des Austenitgefüges des Kohlenstoffstahls 1 in Bainitgefüge umwandeln, typischerweise wird dieser Anteil etwa so gewählt, dass etwa die Hälfte des Austenitgefüges in Bainitgefüge umgewandelt wird.

Nach dem Durchlaufen des Bades 2 wird auf den links angeordneten Umlenkrollen 11 der Kohlenstoffstahl 1 senkrecht nach oben in ein turmartiges Gehäuse 14 mit einer isothermen Temperierungsstation 13 und daran angeordneten Wärmetauschern 20 geleitet, in der die restliche Ausbildung des Bainitgefüges in noch beschriebener Weise ausgeführt wird. Vorher tritt der Kohlenstoffstahl 1 noch in den Bereich einer Abblasung 12 ein, in der restliches Abschreckmittel 21 mittels einer Jetabblasung von der Oberfläche des Kohlenstoffstahls 1 abgeblasen wird. Hierbei ist von besonderer Wichtigkeit, dass diese an sich bekannte Jetabblasung 12 beispielsweise mittels inerter Gase bei derartigen Temperaturen ausgeführt wird, dass der Kohlenstoffstahl 1 möglichst keinen Temperaturpeak beim Durchtritt dieser Jetabblasung 12 aufweist, sondern die Bildung des Bainit in diesem Bereich möglichst ungestört weiterläuft und in dem Bereich der isothermen Temperierungsstation 13 zu Ende geführt werden kann. Hierzu trägt auch bei, dass der Kohlenstoffstahl 1 sowohl senkrecht in das Bad 2 aus der Austenitisierungsstation 3 eingeführt wird als auch senkrecht aus dem Bad 2 wieder in den Bereich der Abblasung 12 nach oben austritt und die Umlenkung des Kohlenstoffstahles 1 auuschließlich innerhalb des Bades 2 erfolgt.

Die isotherme Temperierungsstation 13 beinhaltet nun über entsprechende Temperierung mittels der Wärmetauscher 20 etwa ein Inertgas, dass auf einer derartigen Temperatur gehalten ist, dass die Bainitisierungstemperatur innerhalb der isothermen Temperierungsstation 13 möglichst gleichmäßig vorliegt. Hierdurch und dadurch, dass der Kohlenstoffstahl 1 in der isothermen Temperierungsstation 13 mechanisch nicht belastet wird, kann sich das restliche Gefüge des Kohlenstoffstahls 1, das sich in dem Bad 2 noch nicht gebildet hat, vollständig in Bainitgefüge umwandeln, so dass am Ende der isothermen Temperierungsstation 13 und kurz vor der Umlenkeinheit 15 der Kohlenstoffstahl 1 vollständig ein bainitisches Gefüge aufweist.

Nach dem Durchtreten der isothermen Temperierungsstation 13 wird der Kohlenstoffstahl 1 dann über die Umlenkeinheit 15 in den benachbarten Bereich des turmartigen Gehäuses 14 gelenkt, wo er in eine Abkühleinheit 17, 18 einläuft, in der beispielsweise wieder über ein Inertgas eine Abkühlung des Kohlenstoffstahls 1 vorgenommen wird. Hierbei senken die Kühler 18 derart die Temperatur des Inertgases innerhalb der Abkühleinheit 17, dass eine Abkühlung des Kohlenstoffstahls 1 im Ausgangsbereich aus der Abkühleinheit 17 bei 100°C oder weniger liegt. Von da wird der Kohlenstoffstahl 1 über eine Rolle 9 einer nicht weiter dargestellten Aufhaspeleinheit zugeführt.

Das Bad 2 kann über einen Hubtisch 19 in der Höhe derart verstellt werden, dass etwa Wartungsarbeiten an dem Bad 2 oder den Unterseiten der Austenitisierungsstation 3 beziehungsweise des turmartigen Gehäuses 14 ausgeführt werden können.

Hinsichtlich der metallurgischen und prozesstechnischen Details, die in der Vorrichtung ablaufen, sei auf die vorstehende Beschreibung zu dem erfindungsgemäßen Verfahren verwiesen.

### Sachnummernliste

- 1: - Kohlenstoffstahl
- 2: - Metallbad
- 3: - Austenitisierungsstation
- 4: - induktive Erwärmung
- 5: - Umlenkeinheit
- 6: - Aufheizzone
- 7: - Ausgleichszone
- 8: - Wärmestrahlung
- 9: - Rollen
- 10: - Vorwärmzone
- 11: - Umlenkrollen im Metallbad
- 12: - Abblasung
- 13: - isotherme Temperierungsstation
- 14: - turmartiges Gehäuse
- 15: - Umlenkeinheit
- 17: - Abkühleinheit
- 18: - Kühler
- 19: - Hubtisch
- 20: - Wärmetauscher
- 21: - Abschreckmittel

## Patentansprüche

1. Verfahren zur kontinuierlichen Ausbildung eines Bainitgefüges in einem Kohlenstoffstahl (1), insbesondere in einem Bandstahl, aufweisend die Schritte
- Austenitisieren (3) des Kohlenstoffstahles (1) bei einer Temperatur oberhalb der Austenitisierung-Temperatur,
- Einbringen des austenitisierten Kohlenstoffstahles (1) in ein Bad (2) mit einem Abschreckmittel (21) zur Abkühlung des Kohlenstoffstahles (1) auf eine geringere Temperatur als die Austenitisierungstemperatur,
- Einstellen des Kohlenstoffstahles (1) auf die Umwandlungstemperatur für Bainit und
- Halfen (13) des Kohlenstoffstahles (1) über eine Zeitdauer bei dieser Umwandlungstemperatur sowie anschließendes Abkühlen (17) des Kohlenstoffstahles,
**dadurch gekennzeichnet, dass**
der Kohlenstoffstahl (1) nach der Austenitisierung (3) ein Bad (2) mit einer volumenmäßig geringen Menge des Abschreckmittels (21) durchläuft und dabei so lange mit dem Abschreckmittel (21) in Kontakt gebracht wird, bis sich ein festlegbarer Anteil des Bainitgefüges am Gesamtgefüge des Kohlenstoffstahles (1) in dem Bad (2) mit dem Abschreckmittel (21) ausgebildet hat,
beim Austritt des Kohlenstoffstahles (1) aus dem Bad (2) Reste des Abschreckmittels (21) von der Oberfläche des Kohlenstoffstahles (1) mittels der Einwirkung eines Gases von dem Kohlenstoffstahl (1) entfernt werden,
und nachfolgend die Umwandlung der restlichen Gefügebestandteile des Kohlenstoffstahles (1) in Bainit in einer nachgeschalteten isothermen Temperierungsstation (13) bei der Umwandlungstemperatur für Bainit ohne jede Umlenkung des Kohlenstoffstahles (1) beim Durchlauf durch die isotherme Temperierungsstation (13) solange erfolgt, bis sich das Bainitgefüge vollständig innerhalb des Kohlenstoffstahles (1) ausgebildet hat.

2. Verfahren gemäß Anspruch 1, **dadurch gekennzeichnet, dass** die Einwirkungszeit des Bades (2) mit dem Abschreckmittel (21) auf das Gefüge des Kohlenstoffstahles (1) so lange gewählt wird, bis sich im wesentlichen die Hälfte des Bainitgefüges des Kohlenstoffstahles (1) in dem Bad (2) mit dem Abschreckmittel (21) ausgebildet hat.

3. Verfahren gemäß Anspruch 2, **dadurch gekennzeichnet, dass** die Einwir-' kungszeit des Bades (2) mit dem Abschreckmittel (21) sowie die Verweildauer des Kohlenstoffstahles (1) in der isothermen Temperierungsstation (13) einer typischen Gesamtdauer der Bainitbildung entspricht.

4. Verfahren gemäß einem der vorstehenden Ansprüche, **dadurch gekennzeichnet, dass** der Übergang von dem Bad (2) mit dem Abschreckmittel (21) in die isotherme Temperierungsstation (13) im wesentlichen ohne Temperaturveränderung des Kohlenstoffstahles (1) bei weiterlaufender Bildung des Bainitgefüges erfolgt.

5. Verfahren gemäß Anspruch 1, **dadurch gekennzeichnet, dass** die Entfernung von Resten des Abschreckmittels (21) von der Oberfläche des Kohlenstoffstahles (1) mittels einer Abblasung (12) des Abschreckmittels (21) von dem Kohlenstoffstahl (1) durchgeführt wird.

6. Verfahren gemäß Anspruch 5, **dadurch gekennzeichnet, dass** die Abblasung (12) des Abschreckmittels (21) unter Schutzgasatmosphäre, vorzugsweise mittels temperierter Inertgase erfolgt.

7. Verfahren gemäß einem der Ansprüche 5 oder 6, **dadurch gekennzeichnet, dass** die Temperierung der Gase, vorzugsweise der Inertgase, für die Abblasung (12) des Abschreckmittels (21) von dem Kohlenstoffstahl (1) derart eingestellt wird, dass eine Veränderung der Temperatur des Kohlenstoffstahles (1) bei der laufenden Ausbildung des Bainitgefüges vermieden wird.

8. Verfahren gemäß Anspruch 7, **dadurch gekennzeichnet, dass** die Temperierung der Gase, vorzugsweise der Inertgase, für die Abblasung (12) des Abschreckmittels (21) von dem Kohlenstoffstahl (1) derart geregelt wird, dass die beim Verlassen des Bades (2) mit dem Abschreckmittel (21) auftretende Umwandlungswärme in dem Kohlenstoffstahl (1) durch die temperierten Inertgase abgeführt und die Temperatur des Kohlenstoffstahles (1) im wesentlichen konstant auf der Umwandlungstemperatur für Bainit gehalten wird.

9. Verfahren gemäß einem der Ansprüche 5 bis 8, **dadurch gekennzeichnet, dass** im Bereich der Abblasung (12) des Abschreckmittels (21) keine Umlenkung des Kohlenstoffstahles (1) etwa durch Umlenkrollen (11) vorgenommen wird.

10. Verfahren gemäß einem der vorstehenden Ansprüche, **dadurch gekennzeichnet, dass** die Länge der isothermen Temperaturführung in der isothermen Temperierungsstation (13) in Abhängigkeit von der Durchlaufgeschwindigkeit des Kohlenstoffstahles (1) derart eingerichtet wird, dass sich innerhalb der isothermen Temperierungsstation (13) in dem Kohlenstoffstahl (1) ein vollständiges Bainitgefüge ausbilden kann.

11. Verfahren gemäß einem der vorstehenden Ansprüche, **dadurch gekennzeichnet, dass** der Kohlenstoffstahl (1) nach dem vollständigen Abschluss der Bainitbildung eine Kühleinrichtung (17, 18) durchläuft.

12. Verfahren gemäß Anspruch 11, **dadurch gekennzeichnet, dass** der Kohlenstoffstahl (1) in der Kühleinrichtung (17, 18) auf eine Temperatur gekühlt wird, die Oberflächenveränderungen, insbesondere Oxidation oder Farbveränderungen der Oberfläche verhindert.

13. Verfahren gemäß Anspruch 11, **dadurch gekennzeichnet, dass** die Kühleinrichtung (17, 18) unter einer Schutzgasatmosphäre betrieben wird, um Oberflächenveränderungen, insbesondere Oxidation oder Farbveränderungen der Oberfläche zu verhindern.

14. Verfahren gemäß Anspruch 11, **dadurch gekennzeichnet, dass** die Kühleinrichtung (17, 18) unter Luft betrieben wird, um eine Oberflächenveränderung in Form einer Bläuung des Kohlenstoffstahles herzustellen.

15. Verfahren gemäß einem der Ansprüche 11 bis 14, **dadurch gekennzeichnet, dass** der Kohlenstoffstahl aus der Kühleinrichtung (17, 18) mit einer Austrittstemperatur von im wesentlichen 100 °C oder weniger austritt.

16. Verfahren gemäß einem der vorstehenden Ansprüche, **dadurch gekennzeichnet, dass** als Abschreckmittel (21) ein Metallbad benutzt wird.

17. Verfahren gemäß Anspruch 16, **dadurch gekennzeichnet, dass** als Abschreckmittel (21) ein Salz-/Blei-lWismutbad benutzt wird.

18. Verfahren gemäß einem der vorstehenden Ansprüche, **dadurch gekennzeichnet, dass** der in die Austenitisierungsstation (3) einlaufende, noch relativ kalte Kohlenstoffstahl (1) vor dem Einlaufen in die Austenitisierungsstation (3) zur Vortemperierung ein Aufwärmbad (10), vorzugsweise einen Bereich des Bades (2) mit dem Abschreckmittel (21) durchläuft.

19. Verfahren gemäß einem der vorstehenden Ansprüche, **dadurch gekennzeichnet, dass** das Bad (2) mit dem Abschreckmittel (21) auch **dadurch** auf der Umwandlungstemperatur für die Bainitbildung des Kohlenstoffstahles (1) gehalten wird, dass der Kohlenstoffstahl (1) schon vor dem Eintritt in die Austenitisierungsstation (3) dieses Bad (2) durchläuft und die bei der Abkühlung des Kohlenstoffstahles (1) nach dem Austenitisieren abgegebene Abschreckwärme an den noch relativ kalt in die Austenitisierungsstation (3) einlaufenden Kohlenstoffstahl (3) abgibt, der danach in die Austenitisierungsstation (3) einläuft.

20. Verfahren gemäß einem der vorstehenden Ansprüche, **dadurch gekennzeichnet, dass** im Bereich der Austenitisierung des Kohlenstoffstahles (1) der Kohlenstoffstahl (1) derart geführt wird, dass der in die Austenitisierungsstation (3) einlaufende (6), noch relativ kalte Kohlenstoffstahl (1) von Wärmestrahlung (8) des auf Austenitisierungstemperatur gebrachten Kohlenstoffstahles (1) auf der Auslaufseite der Austenitisierungsstation (3) mit erwärmt wird.

21. Verfahren gemäß Anspruch 20, **dadurch gekennzeichnet, dass** die an den einlaufenden, noch relativ kalten Kohlenstoffstahl (3) abgegebene Wärmestrahlung (8) des schon höher temperiertem Kohlenstoffstahls (1) auf der Auslaufseite (7) der Austenitisierungsstation (3) den Kohlenstoffstahl (1) sehr gleichmäßig erwärmt und stationäre Temperierungsverhältnisse bei der Austenitisierung sowie eine Homogenisierung des Austenitgefüges des Kohlenstoffstahles (1) bewirkt.

22. Verfahren gemäß einem der Ansprüche 20 oder 21, **dadurch gekennzeichnet, dass** die Verweildauer des Kohlenstoffstahles (1) in der Austenitisierungsstation (13) unter dem Einfluss der von dem schon höher temperiertem Kohlenstoffstahl (1) abgegebenen Strahlungswärme (8) so lang gewählt wird, dass sich ein homogenes Austenitgefüge in dem Kohlenstoffstahl (1) einstellt.

23. Verfahren gemäß einem der vorstehenden Ansprüche, **dadurch gekennzeichnet, dass** der Kohlenstoffstahl (1) in der Austenitisierungsstation (13) induktiv erwärmt wird.

24. Vorrichtung zur Ausbildung eines Bainit- oder Sorbitgefüges in einem Kohlenstoffstahl (1), insbesondere in einem Bandstahl, insbesondere zur Durchführung eines Verfahrens nach Anspruch 1, aufweisend eine Austenitisierungsstation (3), mit der der Kohlenstoffstahl (1) auf eine Temperatur oberhalb der Austenitisierung-Temperatur gebracht wird, ein Bad (2) mit einem Abschreckmittel (21) zur Abkühlung des austenitisierten Kohlenstoffstahies (1) auf eine geringere Temperatur als die Austenitisierungstemperatur, eine isotherme Temperierungsstation (13) zum Halten des Kohlenstoffstahles (1) über eine Zeitdauer bei dieser Umwandlungstemperatur sowie eine Abkühlungsstation (17, 18) zum anschließenden Abkühlen des Kohlenstoffstahles (1),
**dadurch gekennzeichnet, dass**
die isotherme Temperierungsstation (13) im wesentlichen senkrecht turmartig ausgebildet ist und die Länge des freien Durchlaufes des Kohlenstoffstahles (1) durch die isotherme Temperierungsstation (13) die Umwandlung des restlichen Gefüges in Bainit ohne Umlenkung des Kohlenstoffstahles (1) erlaubt.

25. Vorrichtung gemäß Anspruch 24, **dadurch gekennzeichnet, dass** durch die Bildung des Bainitgefüges mit einem festlegbaren Anteil am Gesamtgefüge des Kohlenstoffstahles (1) das Volumen des Abschreckmittels (21) in dem Bad (1) minimierbar ist.

26. Vorrichtung gemäß einem der Ansprüche 24 oder 25, **dadurch gekennzeichnet, dass** innerhalb des Bades (2) mit dem Abschreckmittel (21) Umlenkrollen (11) derart angeordnet sind, dass das Austauchen des Kohlenstoffstahles (1) aus dem Bad (2) und in die isotherme Temperierungsstation (13) und/oder das Eintauchen des Kohlenstoffstahles (1) aus der Austenitisierungsstation (13) in das Bad (2) im wesentlichen senkrecht erfolgt.

27. Vorrichtung gemäß einem der Ansprüche 24 bis 26, **dadurch gekennzeichnet, dass** zwischen dem Bad (2) mit dem Abschreckmittel (21) und der isothermen Temperierungsstation (13) eine Einrichtung (12) zur Entfernung von Resten des Abschreckmittels (21) von der Oberfläche des Kohlenstoffstahles (1), insbesondere eine Abblasvorrichtung (12) zum Abblasen des Abschreckmittels (21) von dem Kohlenstoffstahl (1) angeordnet ist.

28. Vorrichtung gemäß einem der Ansprüche 24 bis 27, **dadurch gekennzeichnet, dass** zur Temperierung der Schutzgasatmosphäre in der isothermen Temperierungsstation (13) und/oder der Abkühlstation (17, 18) geregelte Schutzgas-Beheizung oder Wasser-Wärmetauscher (18) angeordnet sind.

29. Vorrichtung gemäß einem der Ansprüche 24 bis 28, **dadurch gekennzeichnet, dass** eine Beheizungseinrichtung eine Schutzgasatmosphäre in der isothermen Temperierungsstation (13) temperiert.

30. Vorrichtung gemäß einem der Ansprüche 24 bis 29, **dadurch gekennzeichnet, dass** der Kohlenstoffstahl (1) den Bereich der Austenitisierung derart durchläuft, dass der in die Austenitisierungsstation (3) einlaufende (6), noch relativ kalte Kohlenstoffstahl (1) von Wärmestrahlung (8) des auf Austenitisierungstemperatur gebrachten Kohlenstoffstahles (1) auf der Auslaufseite der. Austenitisierungsstation (3) mit erwärmt wird.

31. Vorrichtung gemäß einem der Ansprüche 24 bis 30, **dadurch gekennzeichnet, dass** die im wesentlichen turmartig ausgebildete Temperierungsstation (13) ein Gehäuse (14) aufweist, das so unterteilt ist, dass der isotherm zu haltende Kohlenstoffstahl (1) aus dem Bad (2) mit dem Abschreckmittel (21) in einer ersten Kammer (13) senkrecht von unten nach oben und der zu kühlende Kohlenstoffstahl (1) in einer zweiten, benachbart angeordneten Kammer (17) senkrecht von oben nach unten durchläuft.

32. Vorrichtung gemäß Anspruch 31, **dadurch gekennzeichnet, dass** am obersten Punkt des turmartigen Gehäuses (14) eine Umlenkeinheit (15) angeordnet ist, mit der der dort vollständig bainitisch umgewandelte Kohlenstoffstahl (1) aus der isothermen Temperierungsstation (13) in die Abkühlstation (17, 18) umgelenkt wird.

33. Vorrichtung gemäß einem der Ansprüche 24 bis 32, **dadurch gekennzeichnet, dass** in dem Bad (2) mit dem Abschreckmittel (21) ein Salz-/Blei-/Wismut-Gemisch eingefüllt ist.

34. Vorrichtung gemäß einem der Ansprüche 24 bis 33, **dadurch gekennzeichnet, dass** die Vorrichtung zur Ausbildung eines Sorbitgefüges nutzbar ist, indem das Bad (2) mit dem Abschreckmittel (21) auf einer Temperatur gehalten wird, die zur Umwandlung des Kohlenstoffstahles (1) in Sorbit benötigt wird und der Kohlenstoffstahl (1) so lange mit dem Abschreckmittel (21) in Kontakt gebracht wird, bis sich das Sorbitgefüge vollständig oder nahezu vollständig ausgebildet hat und anschließend in der nachgeschalteten isothermen Temperierungsstation (13) im wesentlichen nur noch eine Abkühlung des Kohlenstoffstahles (1) mit dem ausgebildeten Sorbitgefüge durchführbar ist.

## Claims

1. Method for the continuous creation of a bainite structure in a carbon steel (1), particularly in a strip steel, having the steps
- austenitizing (3) of the carbon steel (1) at a temperature above the austenitizing temperature,
- introduction of the austenitized carbon steel (1) into a bath (2) having a quenching agent (21) for cooling the carbon steel (1) to a temperature lower than the austenitizing temperature,
- adjusting the carbon steel (1) to the conversion temperature for bainite, and
- holding the carbon steel (1) at this conversion temperature over a period of time, and then, cooling (17) the carbon steel,
**characterized in that**
after austenitizing (3), the carbon steel (1) passes through a bath (2) having a low amount of the quenching agent (21), in terms of volume, and in this connection is brought into contact with the quenching agent (21) for as long as until a proportion of the bainite structure of the total structure of the carbon steel (1), which proportion can be established, has formed in the bath (2) having the quenching agent (21),
residues of the quenching agent (21) are removed from the carbon steel (1), from the surface of the carbon steel (1) when the carbon steel (1) exits from the bath (2), by means of the action of a gas,
and subsequently, conversion of the remaining structure components of the carbon steel (1) into bainite takes place in a subsequent isothermal tempering station (13), at the conversion temperature for bainite, without any deflection of the carbon steel (1) when passing through the isothermal tempering station (13), for as long as until the bainite structure has formed completely within the carbon steel (1).

2. Method according to claim 1, **characterized in that** the action time of the bath (2) having the quenching agent (21) on the structure of the carbon steel (1) is selected to be as long as until essentially half of the bainite structure of the carbon steel (1) has formed in the bath (2) having the quenching agent (21).

3. Method according to claim 2, **characterized in that** the action time of the bath (2) having the quenching agent (21) and the dwell time of the carbon steel (1) in the isothermal tempering station (13) correspond to a typical total duration of bainite formation.

4. Method according to one of the preceding claims, **characterized in that** the transition from the bath (2) having the quenching agent (21) to the isothermal tempering station (13) essentially takes place without any temperature change of the carbon steel (1), with continuing formation of the bainite structure.

5. Method according to claim 1, **characterized in that** the removal of residues of the quenching agent (21) from the surface of the carbon steel (1) is carried out by means of blowing-off (12) of the quenching agent (21) from the carbon steel (1).

6. Method according to claim 5, **characterized in that** blowing-off (12) of the quenching agent (21) takes place under a protective gas atmosphere, preferably by means of tempered inert gases.

7. Method according to one of claims 5 or 6, **characterized in that** the tempering of the gases, preferably the inert gases, for blowing-off (12) of the quenching agent (21) from the carbon steel (1), is adjusted in such a manner that a change in the temperature of the carbon steel (1) during ongoing creation of the bainite structure is avoided.

8. Method according to claim 7, **characterized in that** the tempering of the gases, preferably the inert gases, for blowing-off (12) of the quenching agent (21) from the carbon steel (1), is regulated in such a manner that the conversion heat in the carbon steel (1) that occurs upon its departure from the bath (2) having the quenching agent (21) is carried away by the tempered inert gases, and the temperature of the carbon steel (1) is held essentially constant at the conversion temperature for bainite.

9. Method according to one of claims 5 to 8, **characterized in that** no deflection of the carbon steel (1), for example by deflection rollers (11), is carried out in the region of blowing-off (12) of the quenching agent (21).

10. Method according to one of the preceding claims, **characterized in that** the length of the isothermal temperature management in the isothermal tempering station (13) is set up as a function of the pass-through speed of the carbon steel (1), in such a manner that a complete bainite structure can form in the carbon steel (1) within the isothermal tempering station (13).

11. Method according to one of the preceding claims, **characterized in that** the carbon steel (1) runs through a cooling device (17, 18) after the bainite formation has been entirely completed.

12. Method according to claim 11, **characterized in that** the carbon steel (1) is cooled, in the cooling device (17, 18), to a temperature that prevents changes in the surface, particularly oxidation or color changes in the surface.

13. Method according to claim 11, **characterized in that** the cooling device (17, 18) is operated under a protective gas atmosphere, in order to prevent surface changes, particularly oxidation or color changes of the surface.

14. Method according to claim 11, **characterized in that** the cooling device (17, 18) is operated under air, in order to produce a surface change in the form of bluing of the carbon steel.

15. Method according to one of claims 11 to 14, **characterized in that** the carbon steel exits from the cooling device (17, 18) at an exit temperature of essentially 100°C or less.

16. Method according to one of the preceding claims, **characterized in that** a metal bath is used as the quenching agent (21).

17. Method according to claim 16, **characterized in that** a salt/lead/bismuth bath is used as the quenching agent (21).

18. Method according to one of the preceding claims, **characterized in that** the carbon steel (1) that runs into the austenitizing station (3) and is still relatively cold passes through a warming bath (10) for pre-tempering, preferably a region of the bath (2) having the quenching agent (21), before it runs into the austenitizing station (3).

19. Method according to one of the preceding claims, **characterized in that** the bath (2) having the quenching agent (21) can be kept at the conversion temperature for the bainite formation of the carbon steel (1) also **in that** the carbon steel (1) passes through this bath (2) even before entering into the austenitizing station (3), and gives off the quenching heat given off during cooling of the carbon steel (1) after austenitizing to the carbon steel (1) that is running into the austenitizing station (3), which is still relatively cold, and then afterwards runs into the austenitizing station (3).

20. Method according to one of the preceding claims, **characterized in that** the carbon steel (1) is guided, in the region of austenitizing of the carbon steel (1), in such a manner that the carbon steel (1) that is running into (6) the austenitizing station (3), and is still relatively cold, is also warmed by heat radiation (8) of the carbon steel (1) that has been brought to the austenitizing temperature, on the run-out side of the austenitizing station (3).

21. Method according to claim 20, **characterized in that** the heat radiation (8) of the carbon steel (1) that has already been tempered to a higher temperature, which heat is given off to the carbon steel (1) that is running in and is still relatively cold, heats the carbon steel (1) very uniformly on the run-out side (7) from the austenitizing station (3), and brings about stationary tempering conditions during austenitizing, as well as homogenization of the austenite structure of the carbon steel (1).

22. Method according to one of claims 20 or 21, **characterized in that** the dwell time of the carbon steel (1) in the austenitizing station (13), under the influence of the radiation heat (8) that is given off by the carbon steel (1) that has already been tempered to a higher temperature, is selected to be so long that a homogeneous austenite structure forms in the carbon steel (1).

23. Method according to one of the preceding claims, **characterized in that** the carbon steel (1) is inductively heated in the austenitizing station (13).

24. Device for the creation of a bainite or sorbite structure in a carbon steel (1), particularly in a strip steel, particularly for carrying out a method according to claim 1, having an austenitizing station (3) with which the carbon steel (1) is brought to a temperature above the austenitizing temperature, a bath (2) having a quenching agent (21) for cooling the austenitized carbon steel (1) to a temperature lower than the austenitizing temperature, an isothermal tempering station (13) for holding the carbon steel (1) at this conversion temperature for a period of time, and a cooling station (17, 18) for subsequently cooling the carbon steel (1),
**characterized in that**
the isothermal tempering station (13) is essentially configured vertically, in tower-like manner, and the length of the free pass-through of the carbon steel (1) through the isothermal tempering station (13) allows conversion of the remaining structure into bainite, without deflection of the carbon steel (1).

25. Device according to claim 24, **characterized in that** the volume of the quenching agent (21) in the bath (2) can be minimized by means of the formation of the bainite structure at a proportion of the bainite structure of the total structure of the carbon steel (1), which proportion can be established.

26. Device according to one of claims 24 or 25, **characterized in that** deflection rollers (11) are disposed within the bath (2) having the quenching agent (21), in such a manner that removing the carbon steel (1) from the bath (2) and placing it into the isothermal tempering station (13), and/or immersing the carbon steel (1) into the bath (2) from the austenitizing station (3) take place essentially vertically.

27. Device according to one of claims 24 to 26, **characterized in that** a device (12) for removing residues of the quenching agent (21) from the surface of the carbon steel (1), particularly a blowing-off device (12) for blowing the quenching agent (21) off the carbon steel (1), is disposed between the bath (2) having the quenching agent (21) and the isothermal tempering station (13).

28. Device according to one of claims 24 to 27, **characterized in that** regulated protective gas heating systems or water heat exchangers (18) are disposed in the isothermal tempering station (13) and/or the cooling station (17, 18), to temper the protective gas atmosphere.

29. Device according to one of claims 24 to 28, **characterized in that** a heating device tempers a protective gas atmosphere in the isothermal tempering station (13).

30. Device according to one of claims 24 to 29, **characterized in that** the carbon steel (1) passes through the region of austenitizing in such a manner that the carbon steel (1) that is running into (6) the austenitizing station (3), and is still relatively cold, is also warmed by heat radiation (8) of the carbon steel (1) that has been brought to the austenitizing temperature, on the run-out side of the austenitizing station (3).

31. Device according to one of claims 24 to 30, **characterized in that** the tempering station (13), which is essentially configured in tower-like manner, has a housing (14) that is subdivided in such a manner that the carbon steel (1) to be kept isothermal runs out of the bath (2) having the quenching agent (21), in a first chamber (13), vertically from the bottom to the top, and the carbon steel (1) that is to be cooled passes through in a second chamber (17), disposed adjacent to the first, vertically from the top to the bottom.

32. Device according to claim 31, **characterized in that** a deflection unit (15) is disposed at the uppermost point of the tower-like housing (14), with which unit the carbon steel (1), which has been completely converted to bainite there, is deflected out of the isothermal tempering station (13) into the cooling station (17,18).

33. Device according to one of claims 24 to 32, **characterized in that** a salt/lead/bismuth mixture is filled into the bath (2) having the quenching agent (21).

34. Device according to one of claims 24 to 33, **characterized in that** the device can be used for the creation of a sorbite structure, **in that** the bath (2) having the quenching agent (21) is held at a temperature that is required for conversion of the carbon steel (1) to sorbite, and the carbon steel (1) is brought into contact with the quenching agent (21) as long as until the sorbite structure has formed, completely or almost completely, and subsequently, in the subsequent isothermal tempering station (13), essentially all that can be carried out is cooling of the carbon steel (1) having the sorbite structure that has formed.

## Revendications

1. Procédé pour la formation en continu d'un squelette de bainite dans un acier au carbone (1), en particulier dans une bande d'acier, présentant les étapes consistant à :
- austénitiser (3) l'acier au carbone (1) à une température située au-delà de la température d'austénitisation,
- plonger l'acier au carbone (1) austénitisé dans un bain (2) comportant un milieu de trempe (21) pour le refroidissement de l'acier au carbone (1) à une température plus faible que la température d'austénitisation,
- ajuster l'acier au carbone (1) à la température de transformation en bainite et
- maintenir (13) l'acier au carbone (1) pendant une certaine durée à cette température de transformation et refroidir consécutivement (17) l'acier au carbone,
**caractérisé en ce que**
l'acier au carbone (1) après austénitisation (3) passe dans un bain (2) ayant une faible quantité volumique de milieu de trempe (21) et y reste en contact avec le milieu de trempe (21) jusqu'à ce qu'une proportion du squelette de bainite pouvant être déterminée par rapport à la totalité du squelette de l'acier au carbone (1) se soit formée dans le bain (2) contenant le milieu de trempe (21),
lors de la sortie de l'acier au carbone (1) hors du bain (2), les résidus de milieu de trempe (21) sont éliminés de la surface de l'acier au carbone (1) sous l'action d'un gaz,
et, par la suite, la transformation des composants restants du squelette de l'acier au carbone (1) en bainite s'effectue dans une station de mise à la température isotherme (13) placée en aval, à la température de transformation en bainite, sans aucune déviation de l'acier au carbone (1) lors du passage à travers la station de mise à la température isotherme (13) jusqu'à ce que le squelette de bainite se soit entièrement formé à l'intérieur de l'acier au carbone (1).

2. Procédé selon la revendication 1, **caractérisé en ce que** le temps d'action du bain (2) contenant le milieu de trempe (21) sur le squelette de l'acier au carbone (1) est choisi pour que sensiblement la moitié du squelette de bainite de l'acier au carbone (1) se soit formée dans le bain (2) contenant le milieu de trempe (21).

3. Procédé selon la revendication 2, **caractérisé en ce que** le temps d'action du bain (2) contenant le milieu de trempe (21) ainsi que la durée de résidence de l'acier au carbone (1) dans la station de mise à la température isotherme (13) correspondent à une durée totale typique de la formation de la bainite.

4. Procédé selon l'une des revendications précédentes, **caractérisé en ce que** la transition entre le bain (2) contenant le milieu de trempe (21) et la station de mise à la température isotherme (13) s'effectue sensiblement sans variation de température de l'acier au carbone (1) alors que la formation du squelette de bainite se poursuit.

5. Procédé selon la revendication 1, **caractérisé en ce que** l'élimination des résidus du milieu de trempe (21) de la surface de l'acier au carbone (1) est réalisée au moyen d'un soufflage (12) du milieu de trempe (21) hors de l'acier au carbone (1).

6. Procédé selon la revendication 5, **caractérisé en ce que** le soufflage (12) du milieu de trempe (21) s'effectue sous atmosphère de gaz protecteurs, de préférence au moyen de gaz inertes mis à température.

7. Procédé selon l'une des revendications 5 ou 6, **caractérisé en ce que** la mise à température des gaz, de préférence des gaz inertes, pour le soufflage (12) du milieu de trempe (21) hors de l'acier au carbone (1) est ajustée de manière à éviter une variation de la température de l'acier au carbone (1) lors de la formation continue du squelette de bainite.

8. Procédé selon la revendication 7, **caractérisé en ce que** la mise à température des gaz, de préférence des gaz inertes, pour le soufflage (12) du milieu de trempe (21) hors de l'acier au carbone (1) est ajustée de manière à évacuer la chaleur de transformation générée lors de la sortie du bain (2) contenant le milieu de trempe (21) dans l'acier au carbone (1) par l'intermédiaire des gaz inertes mis à température et à maintenir la température de l'acier au carbone (1) de manière sensiblement constante à la température de transformation en bainite.

9. Procédé selon l'une des revendications 5 à 8, **caractérisé en ce qu'**aucune déviation de l'acier au carbone (1) n'est effectuée dans la zone de soufflage (12) du milieu de trempe (21), par exemple au moyen de rouleaux de déviation (11).

10. Procédé selon l'une des revendications précédentes, **caractérisé en ce que** la longueur de la commande de la température isotherme dans la station de mise à température isotherme (13) est aménagée en fonction de la vitesse de passage de l'acier au carbone (1) de manière à ce qu'un squelette de bainite complet puisse se former à l'intérieur de la station de mise à température isotherme (13) dans l'acier au carbone (1).

11. Procédé selon l'une des revendications précédentes, **caractérisé en ce que** l'acier au carbone (1) passe par un dispositif de refroidissement (17, 18) après l'achèvement complet de la formation de la bainite.

12. Procédé selon la revendication 11, **caractérisé en ce que** l'acier au carbone (1) est refroidi dans le dispositif de refroidissement (17, 18) à une température qui empêche les modifications de la surface, en particulier l'oxydation ou des modifications chromatiques de la surface.

13. Procédé selon la revendication 11, **caractérisé en ce que** le dispositif de refroidissement (17, 18) fonctionne sous atmosphère de gaz protecteurs pour empêcher les modifications de la surface, en particulier l'oxydation ou des modifications chromatiques de la surface.

14. Procédé selon la revendication 11, **caractérisé en ce que** le dispositif de refroidissement (17, 18) fonctionne à l'air libre pour produire une modification de la surface sous la forme d'un bleuissement de l'acier au carbone.

15. Procédé selon l'une des revendications 11 à 14, **caractérisé en ce que** l'acier au carbone sort du dispositif de refroidissement (17, 18) à une température de sortie de sensiblement 100 °C ou moins.

16. Procédé selon l'une des revendications précédentes, **caractérisé en ce que** l'on utilise un bain métallique comme milieu de trempe (21).

17. Procédé selon la revendication 16, **caractérisé en ce que** l'on utilise un bain de sel / plomb / bismuth comme milieu de trempe (21).

18. Procédé selon l'une des revendications précédentes, **caractérisé en ce que** l'acier au carbone (1), encore relativement froid quand il rentre dans la station d'austénitisation (3), passe par un bain de réchauffage (10) pour un pré-ajustement à température, de préférence dans une zone du bain (2) comportant le milieu de trempe (21), avant de pénétrer dans la station d'austénitisation (3).

19. Procédé selon l'une des revendications précédentes, **caractérisé en ce que** le bain (2) comportant le milieu de trempe (21) est aussi maintenu à la température de transformation pour la formation de la bainite dans l'acier au carbone (1) **en ce que** l'acier au carbone (1) passe dans ce bain (2) avant l'entrée dans la station d'austénitisation (3) et cède la chaleur de trempe rejetée après austénitisation lors du refroidissement de l'acier au carbone (1) à l'acier au carbone (1) arrivant encore relativement froid dans la station d'austénitisation (3), qui pénètre ensuite dans la station d'austénitisation (3).

20. Procédé selon l'une des revendications précédentes, **caractérisé en ce que**, dans la zone d'austénitisation de l'acier au carbone (1), l'acier au carbone (1) est transporté de telle sorte que l'acier au carbone (1) encore relativement froid quand il pénètre (6) dans la station d'austénitisation (3) est réchauffé conjointement par le rayonnement de chaleur (8) de l'acier au carbone (1) porté à la température d'austénitisation du côté sortie de la station d'austénitisation (3).

21. Procédé selon la revendication 20, **caractérisé en ce que** le rayonnement de chaleur (8) de l'acier au carbone (1) déjà ajusté à une température plus élevée, cédé à l'acier au carbone (3) encore relativement froid quand il arrive, chauffe l'acier au carbone (1) de manière très homogène du côté sortie (7) de la station d'austénitisation (3) et crée des conditions de mise à température stationnaires lors de l'austénitisation et produit ainsi une homogénéisation du squelette d'austénite de l'acier au carbone (1).

22. Procédé selon l'une des revendications 20 ou 21, **caractérisé en ce que** la durée de résidence de l'acier au carbone (1) dans la station d'austénitisation (13) sous l'influence de la chaleur de rayonnement (8) cédée par l'acier au carbone (1) déjà ajusté à une température plus élevée est choisie de manière à ce qu'un squelette d'austénite homogène s'instaure dans l'acier au carbone (1).

23. Procédé selon l'une des revendications précédentes, **caractérisé en ce que** l'acier au carbone (1) est chauffé par induction dans la station d'austénitisation (13).

24. Dispositif pour la formation d'un squelette de bainite ou de sorbite dans un acier au carbone (1), notamment dans une bande d'acier, en particulier pour la réalisation d'un procédé selon la revendication 1, présentant une station d'austénitisation (3), avec laquelle l'acier au carbone (1) est porté à une température supérieure à la température d'austénitisation, un bain (2) comportant un milieu de trempe (21) pour le refroidissement de l'acier au carbone austénitisé (1) à une température inférieure à la température d'austénitisation, une station de mise à température isotherme (13) pour le maintien de l'acier au carbone (1) pendant une certaine durée à cette température de transformation ainsi qu'une station de refroidissement (17, 18) pour le refroidissement consécutif de l'acier au carbone (1),
**caractérisé en ce que**
la station de mise à température isotherme (13) prend la configuration d'une tour sensiblement verticale et la longueur du passage libre de l'acier au carbone (1) à travers la station de mise à température isotherme (13) permet la transformation du squelette résiduel en bainite sans déviation de l'acier au carbone (1).

25. Dispositif selon la revendication 24, **caractérisé en ce que** le volume du milieu de trempe (21) dans le bain (2) peut être réduit par la formation du squelette de bainite en une proportion déterminable par rapport au squelette total de l'acier au carbone (1).

26. Dispositif selon l'une des revendications 24 ou 25, **caractérisé en ce que** des rouleaux de déviation (11) sont disposés à l'intérieur du bain (2) comportant le milieu de trempe (21) de manière à ce que le passage de l'acier au carbone (1) du bain (2) à la station de mise à température isotherme (13) et/ou le passage de l'acier au carbone (1) de la station d'austénitisation (13) au bain (2) s'effectuent sensiblement à la verticale.

27. Dispositif selon l'une des revendications 24 à 26, **caractérisé en ce qu'**un système (12) destiné à éliminer les résidus de milieu de trempe (21) de la surface de l'acier au carbone (1), notamment un dispositif de soufflage (12) pour souffler le milieu de trempe (21) hors de l'acier au carbone (1), est disposé entre le bain (2) comportant le milieu de trempe (21) et la station de mise à température isotherme (13).

28. Dispositif selon l'une des revendications 24 à 27, **caractérisé en ce qu'**un chauffage réglé des gaz protecteurs ou un échangeur de chaleur - eau (18) sont disposés pour la mise à température de l'atmosphère de gaz protecteurs dans la station de mise à température isotherme (13) et/ou la station de refroidissement (17, 18).

29. Dispositif selon l'une des revendications 24 à 28, **caractérisé en ce qu'**un dispositif de chauffage met à température une atmosphère de gaz protecteurs dans la station de mise à température isotherme (13).

30. Dispositif selon l'une des revendications 24 à 29, **caractérisé en ce que** l'acier au carbone (1) passe dans la zone d'austénitisation de manière à ce que l'acier au carbone (1) encore relativement froid quand il entre (6) dans la station d'austénitisation (3) soit chauffé conjointement par le rayonnement de chaleur (8) de l'acier au carbone (1) porté à la température d'austénitisation du côté sortie de la station d'austénitisation (3).

31. Dispositif selon l'une des revendications 24 à 30, **caractérisé en ce que** la station de mise à température (13) prenant la forme d'une tour sensiblement verticale présente un logement (14) qui est divisé de manière que l'acier au carbone (1) devant être maintenu à température isotherme sorte du bain (2) comportant le milieu de trempe (21) à la verticale de bas en haut pour entrer dans une première chambre (13) et l'acier au carbone (1) devant être refroidi passe dans une deuxième chambre adjacente (17) à la verticale du haut vers le bas.

32. Dispositif selon la revendication 31, **caractérisé en ce que** sur le point le plus haut du logement (14) en forme de tour est disposé un module de déviation (15) avec lequel l'acier au carbone (1) entièrement transformé en bainite est dévié hors de la station de mise à température isotherme (13) pour entrer dans la station de refroidissement (17, 18).

33. Dispositif selon l'une des revendications 24 à 32, **caractérisé en ce qu'**un mélange de sel / plomb / bismuth est chargé dans le bain (2) comportant le milieu de trempe (21).

34. Dispositif selon l'une des revendications 24 à 33, **caractérisé en ce que** le dispositif est utilisable pour la formation d'un squelette de sorbite, en maintenant le bain (2) comportant le milieu de trempe (21) à une température qui est nécessaire pour la transformation de l'acier au carbone (1) en sorbite et en mettant l'acier au carbone (1) en contact avec le milieu de trempe (21) jusqu'à ce que le squelette de sorbite se soit entièrement formé ou presque entièrement formé et que plus qu'un seul refroidissement de l'acier au carbone (1) avec le squelette de sorbite formé ne soit essentiellement réalisable ensuite dans la station de mise à température isotherme (13) placée en aval.
